# EUROPÄISCHE PATENTSCHRIFT

(11) **EP 3 915 877 B1**
(45) Veröffentlichungstag und Bekanntmachung des Hinweises auf die Patenterteilung: **06.09.2023**
(21) Anmeldenummer: 21176175.4
(22) Anmeldetag: 27.05.2021
(51) Int. Cl.: B64D 11/02, B64D 13/06

(54) **TOILETTENANORDNUNG FÜR EINE FLUGZEUGKABINE EINES FLUGZEUGS, FLUGZEUG MIT DER TOILETTENANORDNUNG SOWIE VERFAHREN ZUR TROCKNUNG EINER STANDFLÄCHE IN DER TOILETTENANORDNUNG**
TOILET SYSTEM FOR AN AIRCRAFT CABIN, AIRCRAFT WITH THE TOILET SYSTEM AND METHOD FOR DRYING A FLOOR IN THE TOILET SYSTEM
AGENCEMENT DE TOILETTES POUR UNE CABINE D'AVION D'UN AVION, AVION DOTÉ DE L'AGENCEMENT DE TOILETTES, AINSI QUE PROCÉDÉ DE SÉCHAGE D'UNE SURFACE D'APPUI DANS L'AGENCEMENT DE TOILETTES

(30) Priorität: 28.05.2020 DE 102020206713
(43) Veröffentlichungstag der Anmeldung: 01.12.2021
(73) Patentinhaber: Diehl Aviation Laupheim GmbH, 88471 Laupheim (DE); Diehl Aerospace GmbH, 88662 Überlingen (DE)
(72) Erfinder: Zager-Rode, Florian, 21614 Buxtehude (DE); Bahns, Tammo Ernst, 21075 Hamburg (DE); Trunk, Lothar, 63879 Weibersbrunn (DE)
(74) Vertreter: Diehl Patentabteilung

(56) Entgegenhaltungen:
- US-A1- 2015 013 063
- US-A1- 2017 283 092
- US-A1- 2020 130 842

## Beschreibung

Die Erfindung betrifft eine Toilettenanordnung für eine Flugzeugkabine eines Flugzeugs mit den Merkmalen des Oberbegriffs des Anspruch 1. Ferner betriff die Erfindung ein Flugzeug mit der Toilettenanordnung mit den Merkmalen des Anspruch 12 sowie ein Verfahren zur Trocknung einer Standfläche in der Toilettenanordnung mit den Merkmalen des Anspruch 13.

In Flugzeugen, insbesondere in Passagierflugzeugen, gehören Flugzeugtoiletten zur Ausstattung einer Flugzeugkabine für Passagiere hinzu. Die gemeinschaftlich nutzbaren Flugzeugtoiletten werden während eines Fluges oftmals stark durch die Passagiere genutzt, wobei die Flugzeugtoilette unterschiedliche sanitäre Einrichtungsgegenstände, wie z.B. eine Wachbecken und ein Toilettenbecken, zur Nutzung für die Passagiere bereitstellen. Bei der Nutzung der sanitären Einrichtungsgegenstände lagert sich durch Spritzwasser kleine Mengen von Flüssigkeit auf den Oberflächen in der Flugzeugtoilette ab. Bei hoher Frequentierung der Flugzeugtoilette durch die Passagiere sammeln sich nach und nach größere Mengen an Spritzwasser als Standnässe an. Beispielsweise staut sich die Nässe auf dem Fußboden an. Der Fußboden verschmutzt durch die angesammelte Standnässe und Schmutzpartikel, welche durch die Passagiere in die Flugzeugtoilette gebracht werden, z.B. an deren Schuhen, sodass das Bord- oder Bodenpersonal die Flugzeugtoilette aufwendig reinigen muss.

So sind Absaugsysteme für eine Flugzeugtoilette bekannt, welche mittels eines Anschlusses an ein Vakuumtoilettensystem der Flugzeugtoilette Feuchtigkeit und Schmutzpartikel in einen Abfallsammelbehälter saugt. Dabei zeigt die Druckschrift DE 10 2018 002 896 A1 eine derartige Flugzeugtoilette mit einem Fußbodenabsaugsystem. Die Flugzeugtoilette weist Seitenwandungen, eine Rückwand und ein Fußbodenelement auf, sowie ein Toilettenbecken, welches im Bereich der Rückwand angeordnet ist. Im Bereich hinter der Rückwand für das Toilettenbecken ist eine Anschlussvorrichtung an ein Vakuumtoilettensystem vorgesehen, wobei das Fußbodenabsaugsystem einen Abfallsammelbehälter aufweist, der unterhalb des Toilettenbeckens angeordnet ist und mindestens ein Saugelement umfasst, welches in Richtung des Toiletteninnenraums ausgerichtet ist, um Flüssigkeiten und Schmutzpartikel vom Fußbodenelement abzusaugen.

Aus der US 2020 / 0130842 A1 ist ein Flugzeug mit einem Waschraummonument bekannt mit Wänden, einem Fußboden-Panel, einer Toilette, und einer Mehrzahl von Waschraum-Vorrichtungen, die individuell entfernbar angebracht sind an den Wänden, dem Fußboden-Panel oder der Toilette. Gemeinsame Schnittstellenpunkte an jeder der Mehrzahl der Waschraum-Vorrichtungen sind unveränderbar in Bezug auf das Waschraummonument.

Aus der US 2017 / 0283092 A1 ist ein Fahrzeug bekannt, welches eine innere Kabine und ein autonomes Reinigungssystem enthält, welches innerhalb einer inneren Kammer der inneren Kabine platziert ist. Das autonome Reinigungssystem enthält einen Reinigungsroboter, der dazu eingerichtet ist, einen Abschnitt der inneren Kammer zu reinigen.

Aus der US 2015 / 0013063 A1 ist ein Fahrzeug wie zum Beispiel ein Luftfahrzeug bekannt. In diesem ist eine Waschraumeinheit enthalten, versorgt durch verschiedene Ausgaben eines Brennstoffzellensystems, einschließlich Nebenprodukten, welche typischerweise zu Abfall werden. Zum Beispiel, aber nicht begrenzt darauf, kann eine Kombination von Wasser, sauerstoffverarmter Luft, thermischer Energie und/oder elektrischer Energie, erzeugt von dem Brennstoffzellensystem genutzt werden, um das Handwaschbecken und eine Toilette der Waschraumeinheit mit Wasser zu versorgen, die Waschraumeinheit mit ihrem elektrischen Bedarf zu versorgen und die Waschraumeinheit und ihre Oberflächen zu erwärmen und/oder zu desinfizieren und/oder zu trocknen.

Der Erfindung liegt die Aufgabe zugrunde, eine Toilettenanordnung für eine Flugzeugkabine eines Flugzeugs zu schaffen, welche ein Ansammeln von Flüssigkeit in der Toilettenanordnung vermeidet und einen Reinigungsaufwand der Toilettenanordnung durch Bord- oder Bodenpersonal reduziert. Diese Aufgabe wird durch eine Toilettenanordnung mit den Merkmalen des Anspruch 1, einem Flugzeug mit der Toilettenanordnung mit den Merkmalen des Anspruch 12 sowie einem Verfahren zur Trocknung einer Standfläche in der Toilettenanordnung mit den Merkmalen des Anspruch 13 gelöst.

Die Erfindung betrifft eine Toilettenanordnung für eine Flugzeugkabine eines Flugzeugs, insbesondere eines Passagierflugzeugs. Das Flugzeug weist ein Kabinenbelüftungssystem zur Versorgung der Flugzeugkabine mit Kabinenluft auf. Das Kabinenbelüftungssystem versorgt beispielsweise einen Passagiersitzplatz in der Flugzeugkabine mit der Kabinenluft. Das Kabinenbelüftungssystem weist vorzugsweise ein Versorgungsnetzwerk mit Zu- und Abluftdüse für die gesamte Flugzeugkabine auf. Die Flugzeugkabine weist vorzugsweise eine oder mehrere Monumente oder Kabinenmodule, wie z.B. eine Bordküche, eine sog. Galley oder ein Ruheabteil für Bordpersonal, ein sog. Crew-Rest-Compartment, auf, wobei diese gemeinsam durch das gleiche Kabinenbelüftungssystem mit Kabinenluft versorgt werden. Die Toilettenanordnung ist vorzugsweise als ein Toilettenmodul und/oder Toilettenmonument ausgebildet und in der Flugzeugkabine integriert oder mit der Flugzeugkabine verbunden. Die Toilettenanordnung ist vorzugsweise als ein begehbarer Raum und/oder Zelle ausgebildet, wobei die Toilettenanordnung vorzugsweise mehrere Seitenwände, eine Rückwand, einen Boden und eine Decke sowie eine verschließbare Tür aufweist. DieToilettenanordnung ist mit dem Kabinenbelüftungssystem zur Belüftung verbunden. Beispielsweise weist die Toilettenanordnung die Zu- und Abluftdüse zur Versorgung mit Kabinenluft auf, sodass insbesondere "Frischluft" in die Toilettenanordnung hinein und "Gebrauchsluft" aus der Toilettenanordnung herausströmt. Die Toilettenanordnung ist vorzugsweise als eine Nasszelle und/oder ein Nassraum ausgebildet, welcher mit einem Wassersystem des Flugzeugs zur Versorgung der Toilettenanordnung mit Frischwasser und zur Aufnahme von Abwasser verbunden ist. Grundsätzlich ist die Toilettenanordnung zur Nutzung durch einen Passagier ausgebildet, beispielsweise für Hygienemaßnahmen oder zur Erledigung einer Notdurft.

Die Toilettenanordnung weist mindestens eine Standfläche zur Auskleidung der Toilettenanordnung auf. Die Standfläche ist innerhalb der Toilettenanordnung, insbesondere innerhalb des Rauminneren der Toilettenanordnung sichtbar, angeordnet. Die Standfläche ist vorzugsweise als eine Fläche zum Abstellen von Objekten, z.B. als eine Ablagefläche, ausgebildet. Alternativ oder optional ergänzend ist die Standfläche als eine begehbare Fläche zum Stehen und/oder Sitzen von Passagieren, z.B. als eine Bodenfläche oder als eine Sitzfläche, ausgebildet. Die Standfläche ist vorzugsweise eben oder zumindest mit einer geringen Neigung ausgebildet, sodass Passagiere oder Objekte darauf standfest anordbar sind. Die Standfläche weist vorzugsweise eine beliebige Flächenform und Flächenausdehnung auf, wobei vorzugsweise die Flächenausdehnung der Standfläche mindestens 100 cm², bevorzugt mindestens 500 cm², im Speziellen mindestens 1 m², misst.

Die Toilettenanordnung weist eine Belüftungseinrichtung auf, wobei die Belüftungseinrichtung eine Eingangsschnittstelle zum Anschluss an das Kabinenbelüftungssystem zur Übernahme der Kabinenluft aufweist. Die Eingangsschnittstelle ist vorzugsweise mit dem Versorgungsnetzwerk des Kabinenbelüftungssystems fluidtechnisch verbunden, sodass über die Eingangsschnittstelle die Kabinenluft, insbesondere Frischluft, entnommen wird und/oder entnehmbar ist. Dadurch wird die Kabinenluft der Belüftungseinrichtung zugeführt und/oder ist zuführbar.

Die Toilettenanordnung weist ein Austrittselement auf, wobei das Austrittselement mit der Eingangsschnittstelle zur Übernahme der Kabinenluft verbunden ist. Das Austrittselement ist mit der Eingangsschnittstelle fluidtechnisch beispielsweise über eine Leitung verbunden, sodass die über die Eingangsschnittstelle entnommene Kabinenluft zum Austrittselement geführt wird und/oder führbar ist. Dies kann insbesondere über eine bevorzugt rohrförmig ausgestaltete Leitung bewerkstelligt werden. Mit anderen Worten: Eingangsschnittstelle und Austrittselement können über eine insbesondere rohrförmige Leitung verbunden sein, durch die die Kabinenluft von der Eingangsschnittstelle zum Austrittselement führbar ist oder geführt werden kann. Das Austrittselement ist vorzugsweise als eine Luftdüse und/oder ein Luftauslass ausgebildet. Das Austrittselement weist vorzugsweise eine Austrittsöffnung auf, welche als ein Spalt oder ein Schlitz ausgebildet ist. Die Austrittsöffnung ist vorzugsweise mindestens 3 cm, bevorzugt mindestens 5 cm, im Speziellen mindestens 15 cm oder sogar mindestens 50 cm breit ausgebildet. Alternativ oder optional ergänzend weist das Austrittselement mehrere Austrittsöffnungen auf, welche eng benachbart in einer Linie und/oder nebeneinander gereiht ausgebildet sind. Die Austrittsöffnungen weisen vorzugsweise eine zusammengenommene Gesamtlänge von mindestens 15cm, bevorzugt von mindestens 50cm, auf. Bevorzugt ist das Austrittselement in seiner Grundform als ein Trichter oder als ein Diffusor ausgebildet, wobei das Austrittselement einen verjüngten Einlass und einen sich trichterförmig ausbreitenden Auslass aufweist.

Erfindungsgemäß ist vorgesehen, dass die Belüftungseinrichtung einen Oberflächenluftstrom aus der Kabinenluft erzeugt. Der Oberflächenluftstrom weist insbesondere Frischluft aus dem Kabinenbelüftungssystem auf und/oder ist aus diesem gebildet, wobei der Oberflächenluftstrom in die Toilettenanordnung strömt. Der Oberflächenluftstrom ist vorzugsweise als ein gebündelter Luftstrom ausgebildet, welcher sich insbesondere flächig ausbreitet. Beispielsweise weist der Oberflächenluftstrom eine Breite von mindestens 3 cm, bevorzugt von mindestens 5 cm, im Speziellen von mindestens 15cm oder sogar mindestens 50 cm auf. Der Oberflächenluftstrom weist vorzugsweise eine Luftstromgeschwindigkeit auf, welche bedingt durch die Geometrie des Austrittselements und durch eine Strömungsgeschwindigkeit der Kabinenluft aus dem Kabinenbelüftungssystem resultiert. Der Oberflächenluftstrom weist vorzugsweise eine Luftstromgeschwindigkeit von mindestens 0,5 m/s, bevorzugt von mindestens 1 m/s, auf. Ferner ist vorgesehen, dass der Oberflächenluftstrom aus dem Austrittselement über die Standfläche strömt, um die Standfläche zu trocknen. Dies geschieht insbesondere dadurch, dass das Austrittselement auf die Standfläche gerichtet ist und somit die Kabinenluft auf die Standfläche lenkt oder leitet. Der Oberflächenluftstrom strömt vorzugsweise über die gesamte Standfläche, sodass die Standfläche gleichmäßig getrocknet wird.

Insbesondere bei der Nutzung der Toilettenanordnung durch die Passagiere lagert sich Flüssigkeit, beispielsweise durch Spritzwasser, an der Standfläche ab. Die Standfläche weist beispielsweise Flüssigkeit in Form von Tropfen oder einer Pfütze auf, wobei der Oberflächenluftstrom über die Standfläche strömt, sodass die Flüssigkeit durch den Oberflächenluftstrom verdunstet. Die insbesondere "nasse" Standfläche wird dadurch getrocknet. Bevorzugt wird die verdunstete Flüssigkeit und/oder Feuchtigkeit über eine Ablufteinrichtung zur Entnahme von Gebrauchsluft der Toilettenanordnung entzogen. Beispielsweise weist die Ablufteinrichtung ein oder mehrere Abluftdüsen auf, welche deckenseitig in der Toilettenanordnung angeordnet sind, um die feuchte Gebrauchsluft anzusaugen. Vorzugsweise weist die Toilettenanordnung die Ablufteinrichtung zur Entnahme von Gebrauchsluft auf. Alternativ ist die feuchte Gebrauchsluft durch eine Ablufteinrichtung des Kabinenbelüftungssystems entnehmbar.

Vorteilhat ist, dass durch die Belüftungseinrichtung sowie dem Austrittselement eine Toilettenanordnung geschaffen ist, welche bereits implementierte Systemanschlüsse beziehungsweise Systemkomponenten im Flugzeug (Kabinenbelüftungssystems) nutzt, um eine einfache und effektive Trocknung von Standflächen in der Toilettenanordnung zu ermöglichen. Dadurch ist eine besonders kostengünstige Toilettenanordnung mit Trocknungsfunktion für Standflächen geschaffen. Die Trocknung der Standfläche wird insbesondere durch eine trockene Kabinenluft aus dem Kabinenbelüftungssystem begünstigt. Das Kabinenbelüftungssystem ist beispielsweise zur Entfeuchtung der Kabinenluft ausgebildet, wobei die Kabinenluft vorzugsweise eine Luftfeuchtigkeit von 20% oder weniger aufweist. Die trockene Kabinenluft begünstig das Verdunsten der Flüssigkeit in der Toilettenanordnung, da diese mehr Feuchtigkeit aufnehmen kann. Vorteilhaft ist, dass diese feuchte Gebrauchsluft wieder dem Kabinenbelüftungssystem zum Entfeuchten zugeführt werden kann und/oder zuführbar ist. Weiterhin vorteilhaft ist, dass durch den Oberflächenluftstrom eine kontinuierliche Trocknung der Standflächen, z.B. des Fußbodens oder der Ablagefläche, möglich ist, wodurch beispielsweise einer Geruchsentstehung durch Flüssigkeit in der Toilettenanordnung vorgebeugt wird und/oder zumindest verringert wird. Dadurch ist eine Toilettenanordnung geschaffen, welche sich durch einen hohen Komfort für die Passagiere auszeichnet. Zudem ist vorteilhaft, dass die Bildung von Standnässe verringert oder verhindert wird, welche beispielsweise zusammen mit Schmutzpartikel zu einem schnelleren Anschmutzen von Oberflächen innerhalb der Toilettenanordnung führt. Dadurch ist eine Toilettenanordnung für eine Flugzeugkabine geschaffen, welche sich durch eine geringe Reinigungsarbeit des Flugzeugpersonals auszeichnet.

In einer bevorzugten Ausgestaltung der Erfindung ist vorgesehen, dass die Standfläche in der Toilettenanordnung waagrecht ausgebildet ist. Unter "waagrecht" ist in der Flugzeugkabine vorzugsweise zu verstehen, dass die Standfläche parallel oder übereinstimmend zu einem Kabinenboden ausgebildet ist, über welchen die Passagiere und Bordpersonal sich bewegen können. Die waagrechte, oder alternativ horizontale Standfläche, ist derart angeordnet, sodass Flüssigkeit auf der Standfläche ansammelbar ist. Denkbar ist, dass die Standfläche eine Neigung gegenüber der Waagrechten zum Ablaufen der Flüssigkeit aufweist, jedoch immer noch mit Flüssigkeit benetzbar ist. Der Oberflächenluftstrom ist zur Trocknung der Standfläche ausgebildet ist. Vorzugsweise strömt der Oberflächenluftstrom zur Trocknung der Standfläche kontinuierlich aus dem Austrittselement.

In einer bevorzugten Ausgestaltung der Erfindung ist vorgesehen, dass die Toilettenanordnung mindestens ein Einrichtungsobjekt zur Innenausstattung der Toilettenanordnung aufweist. Das Einrichtungsobjekt ist vorzugsweise als ein sanitärer Einrichtungsgegenstand ausgebildet. Beispielsweise ist das Einrichtungsobjekt als ein Waschbeckenmodul mit Waschbecken, Wasserhahn und mit Ablagefläche, als ein Toilettenmodul mit Toilettenbecken oder als ein Spiegel mit Ablagefläche ausgebildet. Alternativ oder optional ergänzend ist das Einrichtungsobjekt als ein Verkleidungselement ausgebildet. Beispielsweise ist das Einrichtungsobjekt als eine Seitenwandverkleidung mit Ablagefläche oder als ein Fußbodenelement zur Auskleidung der Bodenfläche ausgebildet. Bevorzugt weist die Toilettenanordnung mehrere Einrichtungsobjekte, z.B. mehrere sanitäre Einrichtungsgegenstände und mehrere Verkleidungselemente, auf. Das Einrichtungsobjekt ist innerhalb, insbesondere räumlich innerhalb, der Toilettenanordnung angeordnet. Ferner ist die Standfläche an dem mindestens einen Einrichtungsobjekt angeordnet. Bevorzugt ist die Standfläche waagrecht an dem Einrichtungsobjekt angeordnet. Das mindestens eine Einrichtungsobjekt weist die mindestens eine Standfläche auf. Bevorzugt sind mehrere Standflächen an unterschiedlichen Einrichtungsobjekten angeordnet. Die Standfläche ist vorzugsweise, je nach Einrichtungsobjekt, unterschiedlich in Flächenform oder Flächenausdehnung beschaffen. Der Oberflächenluftstrom strömt auf das mindestens eine Einrichtungsobjekt zur Trocknung der Standfläche. Folglich ist das Austrittselement auf das Einrichtungsobjekt gerichtet. Bevorzugt ist das Austrittselement eng benachbart zu dem Einrichtungsobjekt angeordnet. Vorzugsweise schließt das Austrittselement an die Standfläche randseitig an.

In einer konstruktiven Ausgestaltung der Erfindung ist vorgesehen, dass die Toilettenanordnung das mindestens eine Einrichtungsobjekt aufweist, wobei das Austrittselement mit dem Einrichtungsobjekt verbunden oder in dem Einrichtungsobjekt integriert ist, wobei das Austrittselement und die Standfläche benachbart zueinander angeordnet sind. Das Austrittselement weist beispielsweise die spalt- oder schlitzförmige Austrittsöffnung auf, wobei das Austrittselement derart in dem Einrichtungsobjekt integriert ist, dass die Austrittsöffnung in das Einrichtungsobjekt als eine Öffnung eingebracht ist. Dadurch ist lediglich die Austrittsöffnung, vorzugsweise als schmaler Spalt oder Schlitz, von dem Austrittselement sichtbar. Die Austrittsöffnung ist benachbart zu der Standfläche, vorzugsweise direkt anschließend angeordnet, sodass der Oberflächenluftstrom nach Austritt direkt auf die Standfläche zur Trocknung strömt. Alternativ ist das Austrittselement mit dem Einrichtungsobjekt verbunden, sodass beispielsweise die Austrittsöffnung randseitig von dem Einrichtungsobjekt, z.B. zwischen zwei Einrichtungsobjekten, angeordnet ist. Die Austrittsöffnung ist vorzugsweise als schmaler Spalt oder eine schmale Fuge randseitig an dem Einrichtungsobjekt ausgebildet. Dies ist besonders vorteilhaft, wenn ein vorhandenes Einrichtungsobjekt mit einer Trocknungsfunktion nachgerüstet werden soll.

In einer bevorzugten Ausgestaltung der Erfindung ist vorgesehen, dass das Austrittselement einen Verteilungskanal mit mindestens einer Austrittsöffnung aufweist, wobei der Verteilungskanal zum flächigen Verteilen des Oberflächenluftstroms mit der Belüftungseinrichtung verbunden ist. Das Austrittselement mit dem Verteilungskanal ist vorzugsweise in dem Einrichtungselement integriert. Beispielsweise verläuft der Verteilungskanal randseitig umlaufend um die Standfläche innerhalb des Einrichtungsobjektes, wobei die mindestens eine Austrittsöffnung nach außen zur Standfläche hin angeordnet ist. Der Oberflächenluftstrom strömt aus der mindestens einen Austrittsöffnung auf die Standfläche zur Trocknung. Vorzugsweise weist das Austrittselement mehrere Austrittsöffnungen, z.B. mehrere spaltenförmige Austrittsöffnungen, auf, wobei die mehreren Austrittsöffnungen gemeinsam den Oberflächenluftstrom erzeugen. Alternativ erzeugen mehrere Austrittselemente und/oder mehrere Austrittsöffnungen mehrere Oberflächenluftströme, welche gemeinsam auf die Standfläche zur Trocknung strömen. Die Oberflächenluftströme müssen dabei nicht gleichgereichtet auf die Standfläche strömen. Beispielsweise strömen die Oberflächenluftströme entgegengesetzt oder überkreuzt auf die Standfläche. Vorteilhaft ist, dass durch den Verteilungskanal ein Oberflächenluftstrom zur Trocknung geschaffen ist, welcher sich flächig ausbreitet und die Standfläche vollflächig trifft, sodass ein optimales Trocknungsergebnis erzeugt wird und/oder erzeugbar ist.

In einer besonders bevorzugten Ausgestaltung der Erfindung ist vorgesehen, dass die Toilettenanordnung das mindestens eine Einrichtungsobjekt aufweist, wobei das Einrichtungsobjekt eine Auffangrinne zur Ansammlung von Flüssigkeit aufweist, wobei die Auffangrinne innerhalb der Standfläche ausgebildet und/oder angrenzend zur Standfläche an dem Einrichtungsobjekt angeordnet ist. Die Auffangrinne ist vorzugsweise als eine Vertiefung oder als eine Nut in das Einrichtungsobjekt eingearbeitet. Beispielsweise ist das Einrichtungsobjekt als Waschbeckenmodul ausgebildet, wobei das Waschbeckenmodul die Auffangrinne und die Standfläche aufweist. Diese sind beispielsweise umlaufend an einem Waschbecken des Waschbeckenmoduls angeordnet. Insbesondere bei größeren Mengen an Flüssigkeit kommt es zu einer Pfützenbildung auf der Standfläche, wobei die Standfläche allein durch Verdunstung nicht getrocknet werden kann. Die Auffangrinne ist vorzugsweise tiefer gelegen als die Standfläche, wobei die Flüssigkeit in die Auffangrinne läuft, sodass die Flüssigkeit sich in der Auffangrinne sammelt und die Pfützenbildung auf der Standfläche vermieden wird und/oder vermeidbar ist. Vorzugsweise ist die Standfläche zur Auffangrinne hin geneigt ausgebildet. Vorzugsweise weist die Standfläche eine Neigung von mindestens 1,5 Grad, bevorzugt von mindestens 3 Grad, auf.

In einer konstruktiven Weiterentwicklung der Erfindung ist vorgesehen, dass die Toilettenanordnung eine Abwasserschnittstelle zur Verbindung mit einem Vakuumabwassersystem des Flugzeugs aufweist, wobei die Auffangrinne mit der Abwasserschnittstelle zum Ablassen der Flüssigkeit verbunden ist. Staut sich beispielsweise eine bestimmte Menge an Flüssigkeit in der Auffangrinne an, kann durch Öffnen eines Ventils der Abwasserschnittstelle die Flüssigkeit in das Vakuumabwassersystem gezogen werden. Vorzugsweise ist das Vakuumabwassersystem zur Entsorgung von Fäkalien mit der Toilettenanordnung verbunden, wobei Schwarzwasser durch einen Unterdruck des Vakuumabwassersystems in einen Abwasserbehälter angesaugt wird und/oder ansaugbar ist. Bevorzugt wird die Flüssigkeit aus der Auffangrinne bei Betätigung einer Toilettenspülung mit abgesaugt.

In einer bevorzugten Ausgestaltung der Erfindung ist vorgesehen, dass das mindestens eine Einrichtungsobjekt als ein Toilettenmodul oder ein Waschbeckenmodul ausgebildet ist. Diese weisen die Standfläche auf, wobei die Standfläche des Toilettenmoduls in seiner Flächenform und Flächenausdehnung unterschiedlich zur Standfläche des Waschbeckenmoduls ausgebildet sein kann. Beispielsweise ist die Standfläche an einen Toilettensitz, einem Toilettendeckel oder einem Toilettenbecken des Toilettenmoduls angeordnet. Der Oberflächenluftstrom strömt beispielsweise über den geschlossenen Toilettendeckel, sodass dieser getrocknet wird. Dazu ist beispielsweise das Austrittselement in einer Rückwandverkleidung der Toilettenanordnung integriert, wobei der Oberflächenluftstrom von der Rückwandverkleidung aus auf den waagrechten Toilettendeckel zur Trocknung strömt.

Das Waschbeckenmodul als Einrichtungsobjekt weist beispielsweise ein Waschbecken mit einem Waschbeckenrand und/oder eine Ablagefläche auf, wobei die Standfläche an dem Waschbeckenrand und/oder der Ablagefläche angeordnet ist. Optional weist das Waschbeckenmodul die Auffangrinne auf. Gerade beim Händewaschen können sich größere Mengen an Flüssigkeit in der Toilettenanordnung sowie an den Standflächen ablagern. Das Austrittselement ist beispielsweise in dem Waschbeckenmodul integriert und weist eine Austrittsöffnung entlang des Waschbeckenrandes auf. Alternativ ist die Austrittsöffnung in einer Seitenwandverkleidung der Toilettenanordnung integriert, wobei die Ablagefläche an die Seitenwandverkleidung angrenzt. Vorzugsweise weist die Toilettenanordnung einen Papierhandtuchspender auf, welcher oberhalb der Ablagefläche angeordnet ist. Beispielsweise tropft Flüssigkeit beim Händetrocknen auf die darunterliegende Ablagefläche. Der Oberflächenluftstrom strömt vorzugsweise kontinuierlich auf die waagrechte Ablagefläche, um die Flüssigkeit zu verdunsten und Geruchsbildung zu vermeiden. Vorteilhaft ist, dass das Austrittselement nahezu überall in der Toilettenanordnung anordbar ist, sodass der Oberflächenluftstrom dort auf das Einrichtungsobjekt triff, wo sich häufig Flüssigkeit ansammelt.

In einer besonders bevorzugten konstruktiven Ausgestaltung der Erfindung ist vorgesehen, dass das mindestens eine Einrichtungsobjekt als eine Fußbodeneinrichtung zur Auskleidung einer Bodenfläche in der Toilettenanordnung ausgebildet ist, wobei die Standfläche an der Fußbodeneinrichtung angeordnet ist. Grundsätzlich kann das Einrichtungsobjekt, wie zuvor beschrieben, als ein beliebiges Objekt, vorzugsweise sanitärer Einrichtungsgegenstand, in der Toilettenanordnung ausgebildet sind. Jedoch stellt die Bodenfläche den Bereich dar, welcher am häufigsten und mit den größten Mengen an Feuchtigkeit in Kontakt kommt. Insbesondere das Spritzwasser bei Nutzung des Toilettenmoduls, des Waschbeckenmoduls oder beim Händetrocknen verursacht auf der Bodenfläche die Ansammlung von Flüssigkeit. Die Fußbodeneinrichtung ist vorzugsweise aus einem Kunststoffmaterial oder einem Kunststoff-Gummi-Gemisch hergestellt. Die Fußbodeneinrichtung weist vorzugsweise ein oder mehrere Fußbodenfließen auf, welche durch den Passagier begehbar sind. Beispielsweise weisen die Fußbodenfließe die Standfläche auf. Das Austrittselement ist vorzugsweise bodennah in der Toilettenanordnung angeordnet, sodass der Oberflächenluftstrom die Fußbodenfließen trocknet. Vorteilhaft ist, dass durch die Trocknungsfunktion der Fußbodeneinrichtung der am häufigsten mit Flüssigkeit in Kontakt stehende Bereich der Toilettenanordnung getrocknet wird. Zudem ist vorteilhaft, dass das Austrittselement bodennah, somit für einen Passagier nahezu unbemerkt, anordbar ist. Dadurch ist eine Toilettenanordnung mit hohem Komfort für die Passagiere geschaffen. Zudem ist vorteilhaft, dass das Austrittselement sich über die gesamte Breite der Fußbodeneinrichtung erstreckbar ist, sodass eine vollflächige und lückenlose Trocknung der Standfläche möglich ist.

In einer konstruktiven Weiterentwicklung der Erfindung ist vorgesehen, dass die Fußbodeneinrichtung mindestens einen Wannenabschnitt und einen Bodenabschnitt aufweist, wobei der Wannenabschnitt senkrecht zum Bodenabschnitt ausgebildet ist, wobei der Wannenabschnitt das Austrittselement und der Bodenabschnitt die Standfläche aufweist. Der Wannenabschnitt ist vorzugsweise als eine randseitige Wandung ausgebildet. Beispielsweise ist der Wannenabschnitt an zwei gegenüberliegenden Rändern der Fußbodeneinrichtung angeordnet. Der Wannenabschnitt kann auch als eine Sockelleiste für den Bodenabschnitt gesehen werden. Vorzugsweise ist der Wannenabschnitt mit dem Bodenabschnitt stoffschlüssig verbunden, sodass diese einteilig ausgebildet sind. Der Bodenabschnitt weist die Standfläche auf, wobei diese vorzugsweise waagrecht ausgebildet ist. Unter "Waagrecht" ist auch eine geringe Neigung des Bodenabschnitts und/oder der Standfläche zum Ablaufen von Flüssigkeit zu verstehen. Ferner strömt der Oberflächenluftstrom von dem Wannenabschnitt ausgehend aus den Austrittselement auf den Bodenabschnitt, um die Standfläche der Fußbodeneinrichtung zu trocknen.

Das Austrittselement ist vorzugsweise in dem Wannenabschnitt integriert. Bevorzugt weist das Austrittselement den Verteilungskanal sowie die Austrittsöffnung auf, welche zusammen in dem Wannenabschnitt integriert sind. Der Verteilungskanal ist beispielsweise als eine hohle Röhre entlang des senkrechten Wannenabschnitts ausgebildet, wobei die eine oder die mehreren Austrittsöffnungen in den Wannenabschnitt eingebracht sind, welche in Richtung des Bodenabschnitts ausgebildet sind. Vorteilhaft ist, dass durch die Integration des Austrittselements in den Wannenabschnitt, der Oberflächenluftstrom besonders nah auf den Bodenabschnitt mit der Standfläche trifft. Weist das Austrittselement den Verteilungskanal auf ist zudem vorteilhaft, dass der Oberflächenluftstrom optimal verteilt werden kann, sodass beispielsweise die Standfläche vollständig von dem Oberflächenluftstrom getroffen wird, wodurch das Trocknungsergebnis verbessert wird.

In einer bevorzugten Weiterentwicklung ist vorgesehen, dass der Bodenabschnitt die Auffangrinne zur Ansammlung von Flüssigkeit aufweist. Die Auffangrinne ist randseitig zur Standfläche an dem Bodenabschnitt angeordnet. Vorzugsweise ist die Auffangrinne derart angeordnet, dass diese gegenüberliegend des Austrittselements an dem Bodenabschnitt angeordnet ist. Die Auffangrinne ist vorzugsweise als eine Nut in den Bodenabschnitt eingebacht, z.B. durch Fräsen, sodass die Auffangrinne tiefer liegend als die Standfläche ausgebildet ist. Der Bodenabschnitt weist vorzugsweise eine Neigung in Richtung der Auffangrinne auf, sodass die Flüssigkeit selbstständig in die Auffangrinne abfließt. Bevorzugt kann der Oberflächenluftstrom derart ausgerichtet sein, dass dieser die Flüssigkeit in Richtung der Auffangrinne von dem Bodenabschnitt abbläst. Die Auffangrinne ist bevorzugt mit der Abwasserschnittstelle zum Ablassen der Flüssigkeit verbunden, sodass die angestaute Flüssigkeit in das Vakuumabwassersystem zur Entsorgung ansaugbar ist. Vorteilhaft ist, dass der Oberflächenluftstrom neben dem Trocknen auch zusätzlich zum Abblasen von Flüssigkeit auf der Standfläche ausgebildet ist. Insbesondere bei größeren Mengen an Flüssigkeit, z.B. über 100 ml einer Flüssigkeit, kann die Trocknung über Verdunstung sehr lange dauern, sodass derartige Mengen an Flüssigkeit über die Auffangrinne von der Standfläche entfernt beziehungsweise aus der Toilettenanordnung entsorgt werden müssen. Der Oberflächenluftstrom bläst die Flüssigkeit von der Standfläche in die Auffangrinne ab, sodass ein Großteil der Flüssigkeit sich in der Auffangrinne sammelt, wobei restliche Feuchtigkeit auf der Standfläche durch den Oberflächenluftstrom verdunstet.

Gemäß der Erfindung ist vorgesehen, dass die Belüftungseinrichtung eine Lüftervorrichtung zur Verdichtung der Kabinenluft aufweist. Grundsätzlich ist die Belüftungseinrichtung mit dem Druck der Kabinenluft aus dem Kabinenbelüftungssystem passiv betreibbar. Zusätzlich kann vorgesehen sein, dass die Lüftervorrichtung die Kabinenluft verdichtet, sodass vorzugsweise die Kabinenluft einen höheren Druck aufweist. Die Lüftervorrichtung erhöht dadurch eine Luftstromgeschwindigkeit des Oberflächenluftstroms, wobei der Oberflächenluftstrom zum Abblasen von Flüssigkeit und zur Trocknung der Standfläche ausgebildet ist. Die Lüftervorrichtung erzeugt eine aktive Ventilation, sodass die Luftstromgeschwindigkeit des Oberflächenluftstroms erhöhbar ist. Vorteilhaft ist, dass durch die Lüftervorrichtung eine Steuerung des Oberflächenluftstroms erzeugt werden kann, sodass beispielsweise bei hoher Nutzung der Toilettenanordnung durch die Passagiere, die Luftstromgeschwindigkeit des Oberflächenluftstroms erhöht werden kann.

Alternativ oder zusätzlich ist gemäß der Erfindung vorgesehen, dass die Belüftungseinrichtung ein Wärmeelement zum thermischen Aufheizen der Kabinenluft aufweist. Das Wärmeelement ist vorzugsweise als ein elektrisches Heizelement, als ein Wärmetauscher oder als eine Wärmesenke ausgebildet. Das Wärmeelement ist mit der Eingangsschnittstelle und dem Austrittselement fluidtechnisch verbunden, sodass die eingespeiste Kabinenluft über die Eingangsschnittstelle zum Wärmeelement geführt wird und/oder führbar ist. Die Kabinenluft strömt an dem Wärmeelement zum Wärmeaustausch vorbei, wobei die wärmebehandelte Kabinenluft, insbesondere aufgeheizte Kabinenluft, zum Austrittselement abgeführt wird und/oder abführbar ist. Dadurch wird der Oberflächenluftstrom zum Trocknen der Standfläche thermisch erwärmt und/oder ist erwärmbar. Vorzugsweise weist der so erzeugte erwärmte Oberflächenluftstrom einen Temperaturunterschied gegenüber der unbehandelten Kabinenluft aus dem Kabinenbelüftungssystem um mindestens +3 °C, bevorzugt um mindestens +5 °C, im Speziellen um mindestens +10 °C, auf. Vorteilhaft ist, dass durch den erwärmten Oberflächenluftstrom ein Verdunstungseffekt von Flüssigkeiten begünstigt wird, sodass eine Toilettenanordnung mit Belüftungseinrichtung geschaffen ist, welche besonders schnell Standflächen in der Toilettenanordnung trocknet.

Um die Kabinenluft zu erwärmen sind unterschiedliche Konzepte zur Wärmeenergieeinbringung denkbar. Beispielsweise ist das Wärmelement als das elektrische Heizelement ausgebildet. Das Heizelement weist vorzugsweise Heizdrähte auf, welche durch Anlegen einer elektrischen Spannung Wärmeenergie abstrahlen, sodass die direkt vorbeiströmende Kabinenluft beheizt wird und/oder beheizbar ist. Alternativ ist das Wärmeelement als der Wärmetauscher ausgebildet, wobei dieser Wärmeenergie von einer Wärmequelle, z.B. einem elektrischen Verbraucher, übernimmt und/oder mit dieser Wärmeenergie austauscht.

Besonders bevorzugt ist jedoch vorgesehen, dass das Wärmeelement als die Wärmesenke ausgebildet ist. Beispielsweise ist die Wärmesenke mit einem elektrischen Verbraucher verbunden, wobei der elektrische Verbraucher im Betreib Wärme abstrahlt und/oder abgibt. Beispielsweise leitet die Belüftungseinrichtung die Kabinenluft zum Wärmeaustausch entlang des elektrischen Verbrauchers, wobei die Wärmesenke Wärmeenergie von dem elektrischen Verbraucher an die vorbeiströmende Kabinenluft abgibt. Als elektrischer Verbraucher kann eine Beleuchtungseinrichtung und/oder ein Display in der Toilettenanordnung, z.B. integriert in einem Spiegel, zur Erwärmung des Oberflächenluftstroms genutzt werden. So leitet die Belüftungseinrichtung die Kabinenluft beispielsweise hinter den Spiegel mit dem Display entlang, sodass die Kabinenluft möglichst nahe an dem elektrischen Verbraucher vorbeigeführt ist. Die Wärmesenke ist beispielsweise als eine sog. Heatpipe oder als ein Kühlkörper, insbesondere als ein metallischer Kühlkörper ausgebildet. Beim Abführen der Wärmeenergie über die Wärmesenke wird gleichzeitig eine Kühlung für den elektrischen Verbraucher geschaffen, sodass dieser beispielsweise vor Überhitzung geschützt ist. Vorteilhaft ist, dass die Abwärme von einem elektrischen Verbraucher genutzt werden kann, um den Oberflächenluftstrom zu erwärmen und um den elektrischen Verbraucher zu kühlen. Wärmeausstoß, z.B. von einem Display, welcher Wärme einfach an die Umgebungsluft abgeben würde, ist so gezielt zur Erwärmung der Kabinenluft beziehungsweise des Oberflächenluftstroms nutzbar.

Ein weiterer Gegenstand der Erfindung betrifft ein Flugzeug mit einer Flugzeugkabine und mit einem Kabinenbelüftungssystem zur Versorgung der Flugzeugkabine mit Kabinenluft. Das Flugzeug ist vorzugsweise als Passagierflugzeug zur Passagierbeförderung ausgebildet. Die Flugzeugkabine weist vorzugsweise mehrere Passagiersitze und/oder Passagiersitzreihen sowie Kabinenmonumente, z.B. eine Galley, auf. Die Flugzeugkabine weist eine Toilettenanordnung, auch Lavatory genannt, auf, wobei diese wie zuvor beschreiben ausgebildet ist. Die Toilettenanordnung ist vorzugsweise als eine absperrbare sanitäre Einrichtung ausgebildet. Die Toilettenanordnung weist die Belüftungseinrichtung mit der Eingangsschnittstelle auf, welche mit dem Kabinenbelüftungssystem des Flugzeugs zur Übernahme von Kabinenluft verbunden ist. Die Belüftungseinrichtung ist mit dem Austrittselement fluidtechnisch verbunden, sodass die Kabinenluft als ein Oberflächenluftstrom aus dem Austrittselement strömt. Der Oberflächenluftstrom strömt zur Trocknung auf die Standfläche, welche in der Toilettenanordnung ausgebildet ist. Grundsätzlich kann die Standfläche beliebige in der Toilettenanordnung angeordnet sein. Bevorzugt ist die Standfläche an dem Fußboden der Toilettenanordnung ausgebildet.

Ein weiterer Gegenstand der Erfindung ist ein Verfahren zur Trocknung einer Standfläche in einer Toilettenanordnung, wobei die Toilettenanordnung wie zuvor beschreiben ausgebildet ist. Das Flugzeug weist das Kabinenbelüftungssystem zur Versorgung der Flugzeugkabine mit Kabinenluft auf, wobei die mindestens eine Standfläche in der Toilettenanordnung durch einen direkten Oberflächenluftstrom aus entnommener Kabinenluft des Kabinenbelüftungssystems getrocknet wird. Dazu ist vorgesehen, dass die Kabinenluft über die Eingangsschnittstelle der Belüftungseinrichtung aus dem Kabinenbelüftungssystem übernommen wird, wobei die Belüftungseinrichtung die Kabinenluft an das Austrittselement übergibt. Die Kabinenluft tritt als Oberflächenluftstrom aus dem Austrittselement, wobei der Oberflächenluftstrom durch das Austrittselement über die Standfläche gelenkt wird. Durch den Oberflächenluftstrom wird die Standfläche getrocknet, wobei Flüssigkeit auf der Standfläche verdunstet. Vorzugsweise wird die feuchte Gebrauchsluft in der Toilettenanordnung über Abluftdüsen angesaugt. Beispielsweise wird die abgesaugte Gebrauchsluft dem Kabinenbelüftungssystem zur Wiederaufbereitung zugeführt.

Optional ist für das Verfahren vorgesehen, dass der Oberflächenluftstrom in einem ersten Betriebszustand der Toilettenanordnung, z.B. bei Nutzung der Toilettenanordnung durch einen Passagier, kontinuierlich auf die Standfläche strömt. Dabei strömt der Oberflächenluftstrom vorzugsweise mit einer geringen Luftstromgeschwindigkeit auf die Standfläche, sodass der Passagier den Oberflächenluftstrom nicht oder nur kaum wahrnimmt. Vorzugsweise wird in einem zweiten Betriebszustand der Toilettenanordnung, z.B. in einem unbenutzten Zustand, die Luftstromgeschwindigkeit des Oberflächenluftstroms zur Intensivierung der Trocknung der Standfläche erhöht. Dabei hält sich kein Passagier in der Toilettenanordnung auf, sodass mit einem merklich starken Oberflächenluftstrom auf die Standfläche zum Trocknen oder Abblasen geströmt wird. Vorzugsweise weist die Toilettenanordnung eine Steuervorrichtung auf, welche den Oberflächenluftstrom in den beiden Betriebszuständen steuert. Beispielsweise weist die Belüftungseinrichtung die Lüftervorrichtung auf, wobei die Lüftervorrichtung mit der Steuervorrichtung elektrisch verbunden ist. Vorzugsweise wird ein Signal der Steuereinrichtung an die Lüftervorrichtung gesendet, wenn die Steuervorrichtung den zweiten Betriebszustand, also eine unbenutzte Toilettenanordnung, erkennt, sodass die Lüftervorrichtung die Luftstromgeschwindigkeit des Oberflächenluftstroms zur Intensivierung der Trocknung erhöht.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
Figur 1 einen schematischen Aufbau einer Toilettenanordnung für eine Flugzeugkabine mit mehreren Einrichtungsobjekten als ein bevorzugtes Ausführungsbeispiel;
Figur 2 eine stark schematisierte Darstellung der Toilettenanordnung mit einem der Einrichtungsobjekte aus Figur 1 und mit einer Belüftungseinrichtung als ein bevorzugtes Ausführungsbeispiel;
Figur 3 eine Seitenansicht des Einrichtungsobjektes aus Figur 2 als eine Fußbodeneinrichtung in einem bevorzugten Ausführungsbeispiel.

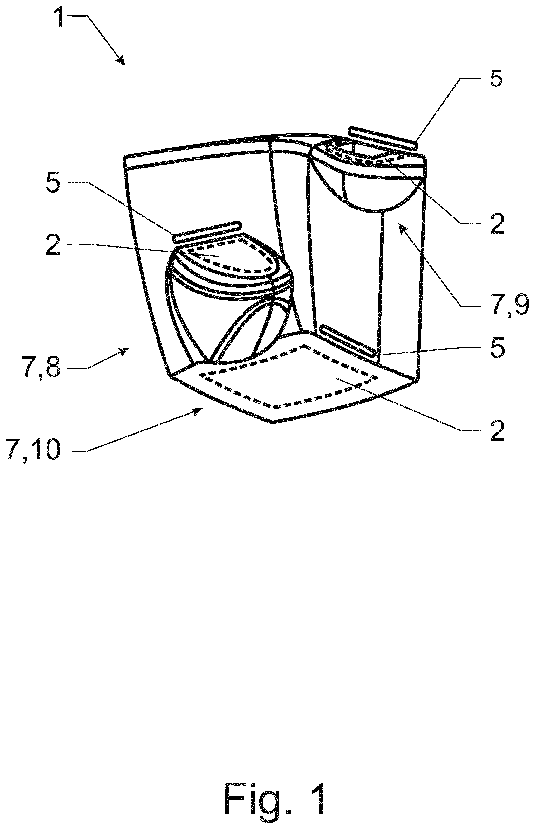

In der Figur 1 ist eine Toilettenanordnung 1 in einer bevorzugten Anordnung schematisch dargestellt. Dabei ist lediglich ein Ausschnitt der Toilettenanordnung 1 gezeigt, welche in einer Flugzeugkabine eines Flugzeugs (nicht gezeigt) angeordnet ist. Grundsätzlich weist die Toilettenanordnung 1 mehrere Seitenwände, eine Rückwand sowie eine Decke und einen Boden auf, wobei die Toilettenanordnung 1 über eine Tür für Passagiere betretbar ist. Die Toilettenanordnung 1 weist mehrere Einrichtungsobjekte 7 auf, welche beispielsweise als sanitäre Einrichtungsgegenstände oder Verkleidungselemente ausgebildet sind. Gemäß dem Ausführungsbeispiel in Figur 1 weist die Toilettenanordnung ein Toilettenmodul 8, ein Waschbeckenmodul 9 sowie eine Fußbodeneinrichtung 10 als Einrichtungsobjekt 7 auf.

Die Einrichtungsobjekte 7 weisen jeweils eine Standfläche 2 auf, welche durch gestrichelte Linien auf den Einrichtungsobjekten 7 angedeutet sind. Die Standflächen 2 sind zum Abstellen von Objekten oder Personen ausgebildet, sodass die Standflächen 2 im Wesentlichen waagrecht an dem Einrichtungsobjekten 7 angeordnet sind. Durch die waagrechte Anordnung der Standflächen 2 ist Flüssigkeit auf diesen ablagerbar. Beispielsweise entsteht Standnässe auf den Standflächen 2, wenn die Toilettenanordnung 1 von den Passagieren, z.B. das Waschbeckenmodul 9 zum Händewaschen, genutzt wird. Die Flüssigkeiten sind mitunter verantwortlich, dass unangenehme Gerüche in der Toilettenanordnung 1 entstehen und die Toilettenanordnung 1 schneller verschmutzt. Dies beeinträchtigt den Komfort der Passagiere sowie bedarf eines höheren Reinigungsaufwands der Toilettenanordnung 1 durch ein Bord- oder Bodenpersonal.

Die Toilettenanordnung 1 weist mehrere Austrittselemente 5 auf. Die Austrittselemente 5 sind jeweils einer Standfläche 2 zugeordnet und benachbart zu diesen in der Toilettenanordnung 1 angeordnet. Die Austrittselemente 5 sind als spaltenförmige Düsen ausgebildet, wobei die Austrittselemente 5 angrenzend zu den Einrichtungsobjekten 7 in der Toilettenanordnung 1 angeordnet sind. Beispielsweise sind diese in einem angrenzenden Verkleidungsteil der Toilettenanordnung 1 integriert. Alternativ oder optional ergänzend ist das Austrittselement 5 in dem Einrichtungsobjekt 7 integriert. Beispielsweise weist das Waschbeckenmodul 9 eine Ablagefläche, z.B. zur Ablage von Objekten der Passagiere, auf, wobei die Ablagefläche als Standfläche 2 ausgebildet ist, wobei das Austrittselement 5 in dem Waschbeckenmodul 9 derart integriert ist, dass dieses an die Ablagefläche angrenzt oder innerhalb der Ablagefläche ausgebildet ist.

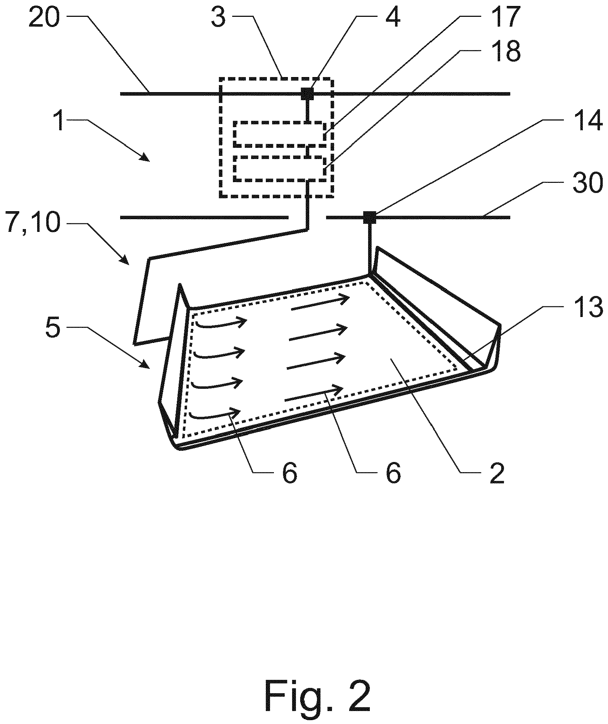

Die Toilettenanordnung 1 weist eine Belüftungseinrichtung 3 auf, welche mit dem Austrittselement 5 verbunden ist. Die Belüftungseinrichtung 3 erzeugt einen Oberflächenluftstrom 6, um die Standflächen 2 zu trocken. Der Oberflächenluftstrom 6 strömt oberflächennah über die Standfläche 2, wobei etwaige Flüssigkeit auf der Standfläche 2 verdunstet wird. Die Belüftungseinrichtung 3 zur Erzeugung des Oberflächenluftstroms 6 ist in der Figur 2 gezeigt.

In der Figur 2 ist in einer stark schematisierten Darstellung die Toilettenanordnung 1 mit der Belüftungseinrichtung 3 gezeigt, wobei übersichtshalber nur ein Einrichtungsobjekt 7 gezeigt ist. Das Einrichtungsobjekt 7 ist als die Fußbodeneinrichtung 10 ausgebildet und weist die Standfläche 2 auf. Der Oberflächenluftstrom 6 wird durch die Belüftungseinrichtung 3 erzeugt, wobei die Belüftungseinrichtung 3 mit einem Kabinenbelüftungssystem 20 zur Belüftung und Klimatisierung der Flugzeugkabine verbunden ist. Zur Verbindung mit dem Kabinenbelüftungssystem 20 weist die Belüftungseinrichtung 3 eine Eingangsschnittstelle 4 auf. Über die Eingangsschnittstelle 4 ist Kabinenluft, z.B. Frischluft, aus dem Kabinenbelüftungssystem 20 entnehmbar. In der Figur 2 sind das Kabinenbelüftungssystem 20, die Belüftungseinrichtung 3 sowie die Eingangsschnittstelle 4 stark schematisch und vereinfacht als Leitungen zum Führen der Kabinenluft dargestellt. Die Kabinenluft wird über die Eingangsschnittstelle 4, z.B. einer Luftkupplung und/oder einem Druckluftanschluss, aus dem Kabinenbelüftungssystem 20 übernommen und der Belüftungseinrichtung 3 zugeführt. Die Belüftungseinrichtung 3 leitet die Kabinenluft durch eine Leitung an das Austrittselement 5 weiter, wobei der Oberflächenluftstrom 6 zur Trocknung der Standfläche 2 aus der Kabinenluft erzeugt wird und/oder erzeugbar ist.

Optional weist die Belüftungseinrichtung 3 ein Wärmeelement 18 zum thermischen Aufheizen der Kabinenluft auf. Das Wärmeelement 18 ist vorzugsweise als ein elektrisches Heizelement, als ein Wärmetauscher oder als eine Wärmesenke ausgebildet. Das Wärmeelement 18 ist mit der Eingangsschnittstelle 4 und dem Austrittselement 5 fluidtechnisch verbunden, sodass die eingespeiste Kabinenluft über die Eingangsschnittstelle 4 zum Wärmeelement 5 geführt wird.

Die Belüftungseinrichtung 3 nutzt den vorhandenen Druck aus dem Kabinenbelüftungssystem 20, um den Oberflächenluftstrom 6 zu erzeugen. Alternativ oder als Ergänzung zu dem Wärmelement 18 weist die Belüftungseinrichtung 3 eine Lüftervorrichtung 17 auf, wobei die Lüftervorrichtung 17 zur Verdichtung der Kabinenluft ausgebildet ist, um eine Luftstromgeschwindigkeit des Oberflächenluftstrom 6 zu erhöhen. Beispielsweise kann es nötig sein, bei Erkennung größerer Mengen an Flüssigkeit auf der Fußbodeneinrichtung 10 beziehungsweise auf der Standfläche 2, z.B. durch Sensoren in der Fußbodeneinrichtung, den Oberflächenluftstrom 6 zu verstärken, um eine Trocknungswirkung zu erhöhen.

Die Standfläche 2 ist durch den Oberflächenluftstrom 6 trockenbar, wobei der Oberflächenluftstrom 6 von dem Austrittselement 5 ausgehend über die Standfläche 2 strömt. Das Austrittselement 5 ist in der Fußbodeneinrichtung 10 integriert. Das Austrittselement 5 ist randseitig neben der rechteckigen Standfläche 2 ausgebildet. Das Austrittselement 5 ist über eine gesamte Seitenlänge der Standfläche 2 ausgebildet, sodass der Oberflächenluftstrom 6 die Standfläche 2 vollflächig überströmt. Die Fußbodeneinrichtung 10 weist eine Auffangrinne 13 auf, wobei die Auffangrinne 13 gegenüberliegend des Austrittselementes 5 auf der Fußbodeneinrichtung 10 angeordnet ist. Die Auffangrinne 13 ist als eine Rinne und/oder Nut in die Fußbodeneinrichtung 10 versenkt eingebracht. Die Auffangrinne 13 fängt größere Mengen an Flüssigkeit, welche z.B. nicht unmittelbar verdunsten, auf. Diese Flüssigkeit aus der Auffangrinne 13 kann beispielsweise in einen Auffangbehälter zur Entsorgung geleitet werden. Optional ist die Auffangrinne 13 mit einer Abwasserschnittstelle 14 zum Ablassen der Flüssigkeit verbunden. Die Abwasserschnittstelle 14 ist beispielsweise als ein Ventil ausgebildet, wobei die Abwasserschnittstelle 14 mit einem Vakuumabwassersystem 30 verbunden ist. Das Vakuumabwassersystem 30 ist zur Entsorgung von Fäkalien, z.B. aus dem Toilettenmodul 8, ausgebildet. Beispielsweise bei Betätigung einer Toilettenspülung wird durch einen Unterdruck des Vakuumabwassersystem 30, z.B. ein Toilettenbecken des Toilettenmoduls 8 abgesaugt. Gleiches kann bei Betätigung der Toilettenspülung mit der Flüssigkeit in der Auffangrinne 13 erfolgen. Beispielsweise wird die Abwasserschnittstelle 14 geöffnet, sodass durch den Unterdruck im Vakuumabwassersystem 30 die Flüssigkeit aus der Auffangrinne 13 gesaugt wird und dem Vakuumabwassersystem 30 zur Entsorgung zugeführt wird.

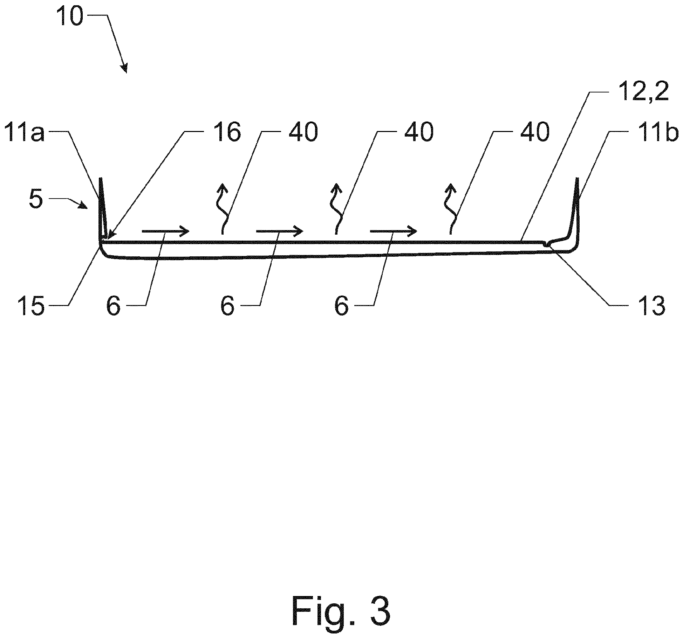

In der Figur 3 ist die Fußbodeneinrichtung 10 aus der Figur 2 in einer Seitenansicht gezeigt, wobei die Fußbodeneinrichtung 10 die Standfläche 2 und das Austrittselement 5 aufweist. Gemäß dem Ausführungsbeispiel weist die Fußbodeneinrichtung 10 einen Wannenabschnitt 11a und einen weiteren Wannenabschnitt 11b auf, welche gegenüberliegend am Rand der Fußbodeneinrichtung 10 ausgebildet sind. Die Fußbodeneinrichtung 10 weist einen Bodenabschnitt 12 auf, welcher zwischen den beiden Wannenabschnitten 11a, b ausgebildet ist. Die Wannenabschnitte 11a, b sind beide senkrecht zum Bodenabschnitt 12 ausgebildet. Der Bodenabschnitt 12 weist die Standfläche 2 auf, wobei der Wannenabschnitt 11a das Auslasselement 5 aufweist. Die Wannenabschnitte 11a, b sind grundsätzlich dazu geeignet, den Bodenabschnitt 12 randseitig wannenförmig einzufassen, sodass Flüssigkeit auf dem Bodenabschnitt 12 stehenbleibt und beispielsweise nicht aus der Toilettenanordnung 1 fließt.

Das Austrittselement 5 weist einen Verteilungskanal 15 auf, welcher mit der Belüftungseinrichtung 3 zum Übernehmen und Verteilen der Kabinenluft verbunden ist. Der Verteilungskanal 15 ist als eine Aussparung oder "dünner" Kanal innerhalb des Wannenabschnitts 11a ausgebildet. Der Verteilungskanal 15 ist beispielsweise an einem Ende und/oder einer Stirnseite des Wannenabschnitts 11a mit der Belüftungseinrichtung 3 zur Übernahme der Kabinenluft verbunden. Ferner weist das Austrittselement 5 eine Austrittsöffnung 16 auf, wobei die Austrittsöffnung 16 mit dem Verteilungskanal 15 verbunden ist. Die Austrittsöffnung 16 ist zum Bodenabschnitt 12 mit der Standfläche 2 hin ausgebildet. Die Austrittsöffnung 16 erstreckt sich beispielsweise über die gesamte Länge oder zumindest über einen Großteil des Verteilungskanals 15, sodass der aus der Austrittsöffnung 16 austretende Oberflächenluftstrom 6 vollflächig über die Standfläche 2 strömt. Die Austrittsöffnung 16 ist als eine einteilige und zusammenhängende Öffnung ausgebildet, wobei die Austrittsöffnung 16 beispielsweise eine Gesamtlänge von mindestens 50cm aufweist. Alternativ weist das Austrittselement 5 mehrere Austrittsöffnungen 16 auf, welche benachbart in einer Linie angeordnet sind. Beispielsweise weisen die mehreren Austrittsöffnungen 16 eine Gesamtlänge von mindestens 50cm auf. Denkbar ist beispielsweise, dass kleine Stege innerhalb der Austrittsöffnung 16 diesen in mehrere Austrittsöffnungen 16 einteilen. Dies kann beispielsweise aus Gründen der Stabilität des Austrittselements 5 erfolgen. Der Verteilungskanal 15 und die Austrittsöffnung 16 sind nahezu auf einer Ebene mit dem Bodenabschnitt 12 beziehungsweise der Standfläche 2 angeordnet, sodass der Oberflächenluftstrom 6 bodennah über diese strömt. Dabei verdunstet etwaige Flüssigkeit und steigt als feuchte Gebrauchsluft 40 auf. Die Gebrauchsluft 40 ist beispielsweise von dem Kabinenbelüftungssystem 20 über Abluftdüsen aus der Toilettenanordnung 1 entnehmbar. In der Figur 3 ist die Gebrauchsluft 40 als aufsteigende Schlangenlinien angedeutet.

Die Fußbodeneinrichtung 10 weist die Auffangrinne 13 auf, wobei die Auffangrinne 13 als eine Vertiefung in die Fußbodeneinrichtung 10 eingebracht ist. Die Auffangrinne 13 ist gegenüberliegend zu dem Austrittselement 5 auf dem Bodenabschnitt 12 angeordnet. Die Auffangrinne 13 ist beispielsweise als eine gerade Rinne zwischen der Standfläche 2 und dem weiteren Wannenabschnitt 11b ausgebildet. Alternativ ist die Auffangrinne 13 U-förmig oder die Standfläche 2 umrandend auf dem Bodenabschnitt 12 angeordnet. Die Auffangrinne 13 ist beispielsweise an einem Ende mit der Abwasserschnittstelle 14 zur Entsorgung der Flüssigkeit verbunden. Der Oberflächenluftstrom 6 bläst beispielsweise Flüssigkeit auf der Standfläche 2 in Richtung der Auffangrinne 13. Dabei kann der Oberflächenluftstrom 6 durch die Lüftervorrichtung 17 intensiviert werden, sodass ein Teil der Flüssigkeit als Gebrauchsluft 40 verdunstet und der restliche Teil der Flüssigkeit in die Auffangrinne 13 zum Ansammeln geblasen wird. Um das Ablaufen der Flüssigkeit in die Auffangrinne 13 zu begünstigen, ist der Bodenabschnitt 12 in Richtung der Auffangrinne geneigt ausgebildet.

### Bezugszeichenliste

- 1: Toilettenanordnung
- 2: Standfläche
- 3: Belüftungseinrichtung
- 4: Eingangsschnittstelle
- 5: Austrittselement
- 6: Oberflächenluftstrom
- 7: Einrichtungsobjekt
- 8: Toilettenmodul
- 9: Waschbeckenmodul
- 10: Fußbodeneinrichtung
- 11a: Wannenabschnitt
- 11b: weiterer Wannenabschnitt
- 12: Bodenabschnitt
- 13: Auffangrinne
- 14: Abwasserschnittstelle
- 15: Verteilungskanal
- 16: Austrittsöffnung
- 17: Lüftervorrichtung
- 18: Wärmeelement
- 20: Kabinenbelüftungssystem
- 30: Vakuumabwassersystem

## Patentansprüche

1. Toilettenanordnung (1) für eine Flugzeugkabine eines Flugzeugs, wobei das Flugzeug ein Kabinenbelüftungssystem (20) zur Versorgung der Flugzeugkabine mit Kabinenluft aufweist,
mit mindestens einer Standfläche (2) zur Auskleidung der Toilettenanordnung (1), wobei die Standfläche (2) innerhalb der Toilettenanordnung (1) angeordnet ist,
mit einer Belüftungseinrichtung (3), wobei die Belüftungseinrichtung (3) eine Eingangsschnittstelle (4) zum Anschluss an das Kabinenbelüftungssystem (20) zur Überführung der Kabinenluft aufweist,
mit einem Austrittselement (5), wobei das Austrittselement (5) mit der Eingangsschnittstelle (4) zur Übernahme der Kabinenluft verbunden ist,
die Belüftungseinrichtung (3) einen Oberflächenluftstrom (6) aus der Kabinenluft erzeugt, wobei der Oberflächenluftstrom (6) aus dem Austrittselement (5) über die Standfläche (2) strömt, um die Standfläche (2) zu trocknen,
**dadurch gekennzeichnet, dass**
die Belüftungseinrichtung (3) eine Lüftervorrichtung (17) zur Verdichtung der Kabinenluft aufweist, wobei die Lüftervorrichtung (17) eine Luftstromgeschwindigkeit des Oberflächenluftstroms (6) erhöht, wobei der Oberflächenluftstrom (6) zum Abblasen von Flüssigkeit und zur Trocknung der Standfläche (2) ausgebildet ist,
und/oder
die Belüftungseinrichtung (3) ein Wärmeelement (18) zum thermischen Aufheizen der Kabinenluft aufweist, wobei das Wärmeelement (18) mit der Eingangsschnittstelle (4) und dem Austrittselement (5) fluidtechnisch verbunden ist, wobei die Kabinenluft an dem Wärmeelement (18) zum Wärmeaustausch vorbeiströmt, sodass der Oberflächenluftstrom (6) zum Trocknen der Standfläche thermisch erwärmbar ist.

2. Toilettenanordnung (1) nach Anspruch 1, **dadurch gekennzeichnet, dass** die Standfläche (2) in der Toilettenanordnung (1) waagrecht ausgebildet ist, sodass Flüssigkeit auf der Standfläche (2) ansammelbar ist, wobei der Oberflächenluftstrom (6) zur Trocknung der Standfläche (2) ausgebildet ist.

3. Toilettenanordnung (1) nach Anspruch 1 oder 2, **dadurch gekennzeichnet, dass** die Toilettenanordnung (1) mindestens ein Einrichtungsobjekt (7) zur Innenausstattung der Toilettenanordnung (1) aufweist, wobei die Standfläche (2) an dem mindestens einen Einrichtungsobjekt (7) angeordnet ist, wobei der Oberflächenluftstrom (6) auf das mindestens eine Einrichtungsobjekt (7) zur Trocknung der Standfläche (2) strömt.

4. Toilettenanordnung (1) nach Anspruch 3, **dadurch gekennzeichnet, dass** das Austrittselement (5) mit dem Einrichtungsobjekt (7) verbunden oder in dem Einrichtungsobjekt (7) integriert ist, wobei das Austrittselement (5) und die Standfläche (2) benachbart zueinander angeordnet sind.

5. Toilettenanordnung (1) nach einem der vorhergehenden Ansprüche, **dadurch gekennzeichnet, dass** das Austrittselement (5) einen Verteilungskanal (15) mit mindestens einer Austrittsöffnung (16) aufweist, wobei der Verteilungskanal (15) zum flächigen Verteilen des Oberflächenluftstroms (6) mit der Belüftungseinrichtung (3) verbunden ist, wobei der Oberflächenluftstrom (6) aus der mindestens einen Austrittsöffnung (16) auf die Standfläche (2) zur Trocknung strömt.

6. Toilettenanordnung (1) nach Anspruch 3 bis 5, **dadurch gekennzeichnet, dass** das Einrichtungsobjekt (7) eine Auffangrinne (13) zur Ansammlung von Flüssigkeit aufweist, wobei die Auffangrinne (13) innerhalb der Standfläche (2) ausgebildet und/oder angrenzend zur Standfläche (2) an dem Einrichtungsobjekt (7) angeordnet ist.

7. Toilettenanordnung (1) nach Anspruch 6, **dadurch gekennzeichnet, dass** die Toilettenanordnung (1) eine Abwasserschnittstelle (14) zur Verbindung mit einem Vakuumabwassersystems (30) des Flugzeugs aufweist, wobei die Auffangrinne (13) mit der Abwasserschnittstelle (14) zum Ablassen der Flüssigkeit verbunden ist.

8. Toilettenanordnung (1) nach einem der Ansprüche 3 bis 7, **dadurch gekennzeichnet, dass** das mindestens eine Einrichtungsobjekt (7) als ein Toilettenmodul (8) oder ein Waschbeckenmodul (9) ausgebildet ist.

9. Toilettenanordnung (1) nach einem der Ansprüche 3 bis 7, **dadurch gekennzeichnet, dass** das mindestens eine Einrichtungsobjekt (7) als eine Fußbodeneinrichtung (10) zur Auskleidung einer Bodenfläche in der Toilettenanordnung (1) ausgebildet ist, wobei die Standfläche (2) an der Fußbodeneinrichtung (10) angeordnet ist.

10. Toilettenanordnung (1) nach Anspruch 9, **dadurch gekennzeichnet, dass** die Fußbodeneinrichtung (10) mindestens einen Wannenabschnitt (11a) und einen Bodenabschnitt (12) aufweist, wobei der Wannenabschnitt (11a) senkrecht zum Bodenabschnitt (12) ausgebildet ist, wobei der Wannenabschnitt (11a) das Austrittselement (5) und der Bodenabschnitt (12) die Standfläche (2) aufweist, wobei der Oberflächenluftstrom (6) von dem Wannenabschnitt (11a) ausgehend aus den Austrittselement (5) entgegen dem Bodenabschnitt (12) strömt, um die Standfläche (2) der Fußbodeneinrichtung (10) zu trocknen.

11. Toilettenanordnung (1) nach Anspruch 10, **dadurch gekennzeichnet, dass** der Bodenabschnitt (12) die Auffangrinne (13) zur Ansammlung von Flüssigkeit aufweist, wobei die Auffangrinne (13) randseitig zur Standfläche (2) am Bodenabschnitt (12) angeordnet ist.

12. Flugzeug mit einer Flugzeugkabine und mit einem Kabinenbelüftungssystem (20) zur Versorgung der Flugzeugkabine mit Kabinenluft, wobei die Flugzeugkabine eine Toilettenanordnung (1) aufweist, **dadurch gekennzeichnet, dass** die Toilettenanordnung (1) nach einem der vorhergehenden Ansprüche ausgebildet ist.

13. Verfahren zur Trocknung einer Standfläche (2) in einer Toilettenanordnung (1) eines Flugzeugs, **dadurch gekennzeichnet, dass** die Toilettenanordnung (1) nach einem der Ansprüche 1 bis 11 ausgebildet ist, wobei das Flugzeug ein Kabinenbelüftungssystem (20) zur Versorgung einer Flugzeugkabine mit Kabinenluft aufweist, wobei die mindestens eine Standfläche (2) in der Toilettenanordnung (1) durch einen direkten Oberflächenluftstrom (6) aus entnommener Kabinenluft des Kabinenbelüftungssystem (20) getrocknet wird.

## Claims

1. Toilet arrangement (1) for an aircraft cabin of an aircraft, wherein the aircraft has a cabin ventilation system (20) for supplying the aircraft cabin with cabin air,
having at least one standing surface (2) for cladding the toilet arrangement (1), wherein the standing surface (2) is arranged within the toilet arrangement (1),
having a ventilator (3), wherein the ventilator (3) has an entry interface (4) for connection to the cabin ventilation system (20) for transfer of the cabin air,
having an outlet element (5), wherein the outlet element (5) is connected to the entry interface (4) for take-over of the cabin air,
the ventilator (3) generating a surface-air stream (6) from the cabin air, wherein the surface-air stream (6) flows over the standing surface (2) from the outlet element (5) in order to dry the standing surface (2),
**characterized in that**
the ventilator (3) has a fan apparatus (17) for compressing the cabin air, wherein the fan apparatus (17) increases an air-stream speed of the surface-air stream (6), wherein the surface-air stream (6) is configured for blowing away liquid and for drying the standing surface (2),
and/or
the ventilator (3) has a heating element (18) for thermally heating the cabin air, wherein the heating element (18) is connected fluidically to the entry interface (4) and to the outlet element (5), wherein the cabin air flows past the heating element (18) for the purpose of heat exchange, with the result that the surface-air stream (6), for drying the standing surface, is thermally heatable.

2. Toilet arrangement (1) according to Claim 1, **characterized in that** the standing surface (2) is formed horizontally in the toilet arrangement (1), with the result that liquid is able to accumulate on the standing surface (2), wherein the surface-air stream (6) is configured to dry the standing surface (2).

3. Toilet arrangement (1) according to Claim 1 or 2, **characterized in that** the toilet arrangement (1) has at least one installation item (7) for the interior design of the toilet arrangement (1), wherein the standing surface (2) is arranged on the at least one installation item (7), wherein the surface-air stream (6) flows onto the at least one installation item (7) for the purpose of drying the standing surface (2).

4. Toilet arrangement (1) according to Claim 3, **characterized in that** the outlet element (5) is connected to the installation item (7) or is integrated in the installation item (7), wherein the outlet element (5) and the standing surface (2) are arranged adjacent to one another.

5. Toilet arrangement (1) according to one of the preceding claims, **characterized in that** the outlet element (5) has a distribution channel (15) with at least one outlet opening (16), wherein the distribution channel (15) is connected to the ventilator (3) for the purpose of areal distribution of the surface-air stream (6), wherein the surface-air stream (6) flows onto the standing surface (2) from the at least one outlet opening (16) for the purpose of drying.

6. Toilet arrangement (1) according to Claims 3 to 5, **characterized in that** the installation item (7) has a collecting channel (13) for accumulating liquid, wherein the collecting channel (13) is formed within the standing surface (2) and/or is arranged on the installation item (7) in a manner adjoining the standing surface (2).

7. Toilet arrangement (1) according to Claim 6, **characterized in that** the toilet arrangement (1) has a wastewater interface (14) for connection to a vacuum wastewater system (30) of the aircraft, wherein the collecting channel (13) is connected to the wastewater interface (14) for drainage of the liquid.

8. Toilet arrangement (1) according to one of Claims 3 to 7, **characterized in that** the at least one installation item (7) is in the form of a toilet module (8) or a washbasin module (9).

9. Toilet arrangement (1) according to one of Claims 3 to 7, **characterized in that** the at least one installation item (7) is in the form of a flooring installation (10) for cladding a base surface in the toilet arrangement (1), wherein the standing surface (2) is arranged on the flooring installation (10).

10. Toilet arrangement (1) according to Claim 9, **characterized in that** the flooring installation (10) has at least one trough portion (11a) and one base portion (12), wherein the trough portion (11a) is formed perpendicular to the base portion (12), wherein the trough portion (11a) has the outlet element (5) and the base portion (12) has the standing surface (2), wherein, proceeding from the trough portion (11a), the surface-air stream (6) flows against the base portion (12) from the outlet element (5) in order to dry the standing surface (2) of the flooring installation (10).

11. Toilet arrangement (1) according to Claim 10, **characterized in that** the base portion (12) has the collecting channel (13) for accumulating liquid, wherein the collecting channel (13) is arranged on the base portion (12) at the boundary of the standing surface (2).

12. Aircraft having an aircraft cabin and having a cabin ventilation system (20) for supplying the aircraft cabin with cabin air, wherein the aircraft cabin has a toilet arrangement (1), **characterized in that** the toilet arrangement (1) is designed according to one of the preceding claims.

13. Method for drying a standing surface (2) in a toilet arrangement (1) of an aircraft, **characterized in that** the toilet arrangement (1) is designed according to one of Claims 1 to 11, wherein the aircraft has a cabin ventilation system (20) for supplying an aircraft cabin with cabin air, wherein the at least one standing surface (2) in the toilet arrangement (1) is dried by a direct surface-air stream (6) of extracted cabin air of the cabin ventilation system (20).

## Revendications

1. Agencement de toilettes (1) pour une cabine d'aéronef d'un aéronef, l'aéronef présentant un système d'aération de cabine (20) pour l'alimentation de la cabine d'aéronef en air de cabine,
avec au moins une surface de support (2) pour l'habillage de l'agencement de toilettes (1), la surface de support (2) étant agencée à l'intérieur de l'agencement de toilettes (1),
avec un appareil d'aération (3), l'appareil d'aération (3) présentant une interface d'entrée (4) pour le raccordement au système d'aération de cabine (20) pour la transmission de l'air de cabine,
avec un élément de sortie (5), l'élément de sortie (5) étant relié à l'interface d'entrée (4) pour recevoir l'air de cabine,
l'appareil d'aération (3) produisant un courant d'air de surface (6) à partir de l'air de cabine, le courant d'air de surface (6) provenant de l'élément de sortie (5) s'écoulant sur la surface de support (2) pour sécher la surface de support (2),
**caractérisé en ce que**
l'appareil d'aération (3) présente un dispositif de ventilation (17) pour comprimer l'air de cabine, le dispositif de ventilation (17) augmentant une vitesse de courant d'air du courant d'air de surface (6), le courant d'air de surface (6) étant configuré pour évacuer le liquide en soufflant et sécher la surface de support (2), et/ou
l'appareil d'aération (3) présentant un élément chauffant (18) pour le chauffage thermique de l'air de cabine, l'élément chauffant (18) étant relié fluidiquement à l'interface d'entrée (4) et à l'élément de sortie (5), l'air de cabine s'écoulant devant l'élément chauffant (18) pour l'échange de chaleur, de telle sorte que le courant d'air de surface (6) peut être chauffé thermiquement pour le séchage de la surface de support.

2. Agencement de toilettes (1) selon la revendication 1, **caractérisé en ce que** la surface de support (2) dans l'agencement de toilettes (1) est configurée horizontalement, de telle sorte que le liquide peut être accumulé sur la surface de support (2), le courant d'air de surface (6) étant configuré pour sécher la surface de support (2).

3. Agencement de toilettes (1) selon la revendication 1 ou 2, **caractérisé en ce que** l'agencement de toilettes (1) présente au moins un objet d'équipement (7) pour l'aménagement intérieur de l'agencement de toilettes (1), la surface de support (2) étant agencée sur l'au moins un objet d'équipement (7), le courant d'air de surface (6) s'écoulant sur l'au moins un objet d'équipement (7) pour sécher la surface de support (2).

4. Agencement de toilettes (1) selon la revendication 3, **caractérisé en ce que** l'élément de sortie (5) est relié à l'objet d'équipement (7) ou est intégré dans l'objet d'équipement (7), l'élément de sortie (5) et la surface de support (2) étant agencés de manière voisine l'un de l'autre.

5. Agencement de toilettes (1) selon l'une quelconque des revendications précédentes, **caractérisé en ce que** l'élément de sortie (5) présente un canal de distribution (15) avec au moins une ouverture de sortie (16), le canal de distribution (15) étant relié à l'appareil d'aération (3) pour distribuer à plat le courant d'air de surface (6), le courant d'air de surface (6) s'écoulant de l'au moins une ouverture de sortie (16) sur la surface de support (2) pour le séchage.

6. Agencement de toilettes (1) selon les revendications 3 à 5, **caractérisé en ce que** l'objet d'équipement (7) présente une gouttière de collecte (13) pour l'accumulation de liquide, la gouttière de collecte (13) étant réalisée à l'intérieur de la surface de support (2) et/ou étant agencée sur l'objet d'équipement (7) de manière adjacente à la surface de support (2).

7. Agencement de toilettes (1) selon la revendication 6, **caractérisé en ce que** l'agencement de toilettes (1) présente une interface d'eaux usées (14) destinée à être reliée à un système d'eaux usées sous vide (30) de l'aéronef, la gouttière de collecte (13) étant reliée à l'interface d'eaux usées (14) pour évacuer le liquide.

8. Agencement de toilettes (1) selon l'une quelconque des revendications 3 à 7, **caractérisé en ce que** l'au moins un objet d'équipement (7) est configuré sous la forme d'un module de toilettes (8) ou d'un module de lavabo (9).

9. Agencement de toilettes (1) selon l'une quelconque des revendications 3 à 7, **caractérisé en ce que** l'au moins un objet d'équipement (7) est configuré sous la forme d'un équipement de plancher (10) destiné à habiller une surface de fond dans l'agencement de toilettes (1), la surface de support (2) étant agencée sur l'équipement de plancher (10).

10. Agencement de toilettes (1) selon la revendication 9, **caractérisé en ce que** l'aménagement de plancher (10) présente au moins une section de cuve (11a) et une section de fond (12), la section de cuve (11a) étant configurée perpendiculairement à la section de fond (12), la section de cuve (11a) présentant l'élément de sortie (5) et la section de fond (12) présentant la surface de support (2), le courant d'air de surface (6) s'écoulant en partant de la section de cuve (11a) à partir de l'élément de sortie (5) vers la section de fond (12) afin de sécher la surface de support (2) de l'équipement de plancher (10) .

11. Agencement de toilettes (1) selon la revendication 10, **caractérisé en ce que** la section de fond (12) présente la gouttière de collecte (13) pour l'accumulation de liquide, la gouttière de collecte (13) étant agencée sur la section de fond (12) du côté du bord de la surface de support (2).

12. Aéronef avec une cabine d'aéronef et avec un système d'aération de cabine (20) pour l'alimentation de la cabine d'aéronef en air de cabine, la cabine d'aéronef présentant un agencement de toilettes (1), **caractérisé en ce que** l'agencement de toilettes (1) est configuré selon l'une quelconque des revendications précédentes.

13. Procédé de séchage d'une surface de support (2) dans un agencement de toilettes (1) d'un aéronef, **caractérisé en ce que** l'agencement de toilettes (1) est configuré selon l'une quelconque des revendications 1 à 11, l'aéronef présentant un système d'aération de cabine (20) pour l'alimentation d'une cabine d'aéronef en air de cabine, l'au moins une surface de support (2) dans l'agencement de toilettes (1) étant séchée par un courant d'air de surface direct (6) provenant de l'air de cabine prélevé du système d'aération de cabine (20).
